# EUROPÄISCHE PATENTANMELDUNG

(11) **EP 2 177 864 A2**
(43) Veröffentlichungstag der Anmeldung: **21.04.2010**
(21) Anmeldenummer: 09166756.8
(22) Anmeldetag: 29.07.2009
(51) Int. Cl.: F41H 1/02, F41H 5/04

(54) **Körperschutzweste**

(30) Priorität: 14.10.2008 DE 102008051184
(71) Anmelder: Dynacc GmbH, 41334 Nettetal (DE)
(72) Erfinder: Hexels, Gerd, 41334 Nettetal (DE)
(74) Vertreter: Lorenz, Markus

(57) **Zusammenfassung**

Eine am Körper zu tragende Schutzvorrichtung, insbesondere eine ballistische Schutzweste (1) weist einen aus mehreren Lagen zusammengesetzten geschosshemmenden Verbund (2) auf. In den geschosshemmenden Verbund (2) ist ein Energiespeicher (3) zur elektrischen Energieversorgung integriert. Der Energiespeicher (3) kann aus mehreren Energiespeicher-Lagen (6) gebildet sein.

## Beschreibung

Die Erfindung betrifft eine am Körper zu tragende Schutzvorrichtung, insbesondere eine ballistische Schutzweste, gemäß dem Oberbegriff von Anspruch 1.

Am Körper zu tragende Schutzvorrichtungen bzw. gepanzerte oder geschossabhaltende Kleidungsstücke werden üblicherweise beim Militär und der Polizei verwendet, um Personen gegen Angriffe mit Stichwaffen oder Geschossen zu schützen.

Zur Gewährleistung eines ballistischen Schutzes weisen die am Körper zu tragenden Schutzvorrichtungen einen aus mehreren Lagen zusammenge-setzten, geschosshemmenden Verbund auf. Unterschieden wird dabei im wesentlichen zwischen sogenannten soft-/weichballistischen und hartballistischen Schutzpaketen. In der Softballistik/Weichballistik setzt sich der geschosshemmende Verbund aus textilen Werkstoffen zusammen. Der soft-/weichballistische Verbund beinhaltet keine zusätzlichen Stahlplatten, Keramikplatten, Polyethylenplatten oder Platten aus anderen Materialien, um die auftreffenden Geschosse zu stoppen. Dies unterscheidet den soft-/weichballistischen Verbund von einem hartballistischen Verbund, bei dem zumindest eine der vorgenannten Platten eingesetzt wird.

Die Softballistik bietet einen allgemeinen Schutz vor Pistolenmunition mit Weichkern und Rundkopf sowie Schutz vor gängiger Pistolenmunition auch mit Hartkern. Der Schutz gegen Stichwaffen, insbesondere Messer, Nadeln oder anderen spitzen und/oder schneidfähigen Gegenständen ist in soft-/weichballistischen Verbunden nicht zwingend inbegriffen und muss gegebenenfalls zusätzlich erbracht werden. Dies wird als Stichschutz bezeichnet.

Hartballistische, geschosshemmende Verbunde bieten im Unterschied zur Softballistik auch gegenüber Geschossen mit sehr hoher Geschwindigkeit und/oder mit sehr harten Kernen oder Geschossmänteln, beispielsweise Langkerngeschossen, einen geeigneten Schutz. Hierzu werden starre Verbundplatten, angepasst an den zu schützenden Bereich, in unterschiedlicher Größe und Form verwendet. Die Platten können je nach Anforderung aus unterschiedlichen Materialien bestehen. Zusätzlich zu dem ballistischen Schutz bieten hartballistische Schutzpakete konstruktionsbedingt auch einen Stichschutz gegen Hieb- und Stichwaffen.

Der Einsatz von softballistischen oder hartballistischen geschosshemmenden Verbund- bzw. Schutzpaketen hängt unter anderem von der Art der zu erwartenden Gefahr ab. Der Vorteil von softballistischen Schutzpaketen besteht darin, dass diese aufgrund ihres Aufbaus aus textilen Werkstoffen (ohne eine zusätzliche starre Platte) flexibel sind und daher besser getragen und an den zu schützenden Körper angepasst werden können.

Am Körper zu tragende Schutzvorrichtungen, insbesondere ballistische Schutzwesten, haben den Nachteil, dass diese ein entsprechendes Gewicht aufweisen, welches der Träger zusätzlich zu tragen hat. Im Regelfall, insbesondere bei militärischen Einsätzen, aber auch bei Polizeieinsätzen, müssen die mit der Schutzvorrichtung ausgerüsteten Personen weitere Geräte und Materialien tragen. Hierbei kann es sich zum Beispiel um Waffen, Funkgeräte, Lampen, Mini-Computer, GPS-Systeme und weitere technische, insbesondere elektrisch betriebene Geräte handeln. Diese Geräte benötigen zumeist Strom, so dass zusätzlich Stromversorgungseinheiten transportiert werden müssen. Aus dem allgemeinen Stand der Technik, zum Beispiel der US 6,982,497 B2, ist eine Vorrichtung bekannt, mit der beim Gehen Strom erzeugt werden kann. Es ist jedoch üblich, dass die Personen, die die Schutzvorrichtung tragen, Batterien mit sich führen, um die diversen elektrischen Geräte betreiben zu können. Im Allgemeinen werden die Batterien in Taschen von Bekleidungsstücken gesteckt, in Rucksäcken transportiert oder an geeigneten Stellen des Rucksacks oder des Bekleidungsstücks befestigt. Neben dem hierfür erforderlichen Platzbedarf für die Batterien stellen diese auch eine potenzielle Gefährdungsquelle für den Träger dar. Alle bekannten Batterien, insbesondere die Lithium-Ionen oder die Lithium-Polymerbatterie sind gegen Beschädigungen anfällig. Die Batterien stellen eine kleine Explosionsquelle dar, wenn diese unter Beschuss kommen. Ein Beschuss kann eine chemische Reaktion auslösen, die dazu führt, dass die Batterie explodiert.

Der vorliegenden Erfindung liegt daher die Aufgabe zugrunde, eine am Körper zu tragende Schutzvorrichtung zu schaffen, die die Nachteile des Standes der Technik löst, insbesondere Gefährdungsquellen für die die Schutzvorrichtung tragende Person reduziert.

Erfindungsgemäß wird diese Aufgabe dadurch gelöst, dass in den geschosshemmenden Verbund ein Energiespeicher zur elektrischen Energieversorgung integriert ist.

Der Erfinder hat erkannt, dass die Kombination eines Energiespeichers mit einem geschosshemmenden Verbund gegenüber dem vorbekannten Stand der Technik, bei dem die ballistischen Schutzpakete, d. h. die geschosshemmenden Verbunde und die Energiespeicher, nur getrennt voneinander eingesetzt wurden, erhebliche Vorteile hat. Einer der wesentlichsten Vorteile ist dabei, dass die Energieversorgung nunmehr effektiv vor schadhaften mechanischen Einflüssen, wie zum Beispiel Beschuss und/oder Hieb- und Stichwaffen geschützt ist. Somit ist die Funktionsfähigkeit der elektrischen Komponenten/Systeme, welche von dem Energiespeicher elektrisch versorgt werden, gegenüber dem bisherigen Stand der Technik erheblich verbessert. Bisher war der Energiespeicher überhaupt nicht oder nur geringfügig geschützt. Durch die erfindungsgemäße Lösung kommt nunmehr das ballistische Schutzpotenzial abhängig von der Positionierung des Energiespeichers in dem geschosshemmenden Verbund teilweise, vorzugsweise komplett zum Tragen. Beim Stand der Technik hatte eine schadhafte mechanische Einwirkung auf den Energiespeicher, zum Beispiel durch Beschuss und/oder Hieb- und Stichwaffen, einen Totalausfall sämtlicher elektrischer Komponenten/Systeme sowie eine erhebliche Gefährdung für die Person, zum Beispiel durch ein Austreten des Elektrolyt, eine Explosion oder einen Kurzschluss zur Folge. Diese Probleme werden durch die erfindungsgemäße Lösung vermieden.

Ein weiterer Vorteil der erfindungsgemäßen Lösung besteht darin, dass das Gewicht des Energiespeichers intelligenter am Körperschwerpunkt verteilt werden kann, so dass die Ermüdung des Trägers reduziert wird und somit seine verbesserte Leistungsfähigkeit über einen größeren Zeitraum zur Verfügung steht.

Von Vorteil ist es des weiteren, dass die durch den Betrieb des Energiespeichers entstehende Wärme als Heizung für die die Schutzvorrichtung tragende Person genutzt werden kann. Dadurch verbraucht dieser weniger Energie, um die Körpertemperatur zu halten und ist somit leistungsfähiger. Umgekehrt heizt die die Schutzvorrichtung tragende Person den Energiespeicher bei kalten Umgebungstemperaturen. Durch diese Korrelation wird die Temperatur bzw. der Grad der Viskosität des Elektrolyts auf einem arbeitsfähigen Niveau gehalten, so dass die Leistungsfähigkeit des Energiespeichers signifikant erhöht wird. Von Vorteil ist es, wenn der geschosshemmende Verbund mit dem integrierten Energiespeicher von einer gemeinsamen Außenhülle umschlossen ist. Von Vorteil ist es dabei, wenn der Verbund mit einer Folie wasserdicht verschweißt ist.

Die Implementierung des Energiespeichers im geschosshemmenden Verbund reduziert das Gewicht und den Anteil der Verpackungsschutzmaterialien. Der Erfinder hat erkannt, dass eine Schutzfolie ausreichend ist, um den geschosshemmenden Verbund mit dem integrierten Energiespeicher zu schützen. Beim Stand der Technik wurde eine Schutzfolie für das ballistische Schutzpaket und eine separate Schutzfolie für den Energiespeicher eingesetzt. Durch die erfindungsgemäße Lösung lässt sich somit eine Schutzfolie einsparen. Von Vorteil ist es, wenn die erfindungsgemäße Schutzfolie mehrere, vorzugsweise alle nachfolgenden Eigenschaften, wie Feuchtigkeitsundurchlässigkeit, Wasserundurchlässigkeit, Lichtundurchlässigkeit und Luftundurchlässigkeit, aufweist.

Von Vorteil ist es, wenn der Energiespeicher lagenweise in den geschosshemmenden Verbund integriert ist. Vorzugsweise kann der Energiespeicher als elektrochemische Stromquelle bzw. als Akkumulator bzw. als Batterie ausgebildet sein. Unter dem Begriff Batterie sollen im Rahmen der Erfindung sowohl mehrere in Serie geschaltete galvanische Zellen (oder galvanische Elemente), die zu einem Paket zusammengefasst sind, als auch einzelne Zellen verstanden werden.

Grundsätzlich bestehen Energiespeicher, welche auch als Akkumulatoren bezeichnet werden, aus zwei Elektroden, die in einer Elektrolyt-Lösung eingetaucht sind. Durch chemische Reaktionen wird ein elektrischer Strom erzeugt. Dies kann die Bereitstellung von elektrischem Strom bedeuten (entladen) sowie das Zuführen von elektrischem Strom (laden). Die genaue chemische Reaktion hängt von der Art des Energiespeichers ab. Die verschiedenen Energiespeicher unterscheiden sich durch das verwendete Elektrodenmaterial, die Bauform und das Elektrolyt, d. h. die stromleitende Flüssigkeit, die meist aus Wasser (H₂O) besteht, welches durch das Hinzufügen von Verunreinigungen leitend wird.

Für den Einsatz in einem geschosshemmenden Verbund eignet sich ein Energiespeicher besonders, der ergonomisch anpassbar ist, hinsichtlich seiner Geometrie und Leistung frei dimensionierbar ist, der flexibel ist und dessen Gefahrenpotenzial bei ungewollten elektronischen, thermischen und mechanischen Einflüssen möglichst gering ist.

Besonders geeignet zur Integration in einen geschosshemmenden Verbund sind Folienbatterien.

Grundsätzlich eignen sich Batterien aus NiCd (Nickel-Cadmium), NiMH (Nickel-Metallhybrid), PB (Blei), LiIon (Lithium-Ionen), LiPo (Lithium-Polymer). Weitere geeignete E-nergiespeichersysteme sind LiCoO₂/Graphit, LiCoO₂/Titanat, LiFePo₄/Graphit, LiFePo₄/Titanat, LiFe, Li-Mn, RAM, PTMA, Ni-Fe, Na/NiCl, Silber-Zink-Akku, Silikon-Akku, Nickel-Wasserstoff-Akku, Zink-Brom-Akku.

Ein besonderer Vorteil der LiPo (Lithium-Polymer)-Batterie besteht darin, dass diese ein geringes Gewicht aufweist, auslaufsicher ist und in einer fast beliebigen Form, insbesondere auch sehr dünn, eingesetzt werden kann.

Von Vorteil ist es, wenn der Energiespeicher derart in den geschosshemmenden Verbund integriert ist, dass der Energiespeicher, wenn die Schutzvorrichtung korrekt getragen wird, an der körperzugewandten Seite des Verbundes angeordnet ist.

Dadurch wird der Energiespeicher maximal vor mechanischen Einwirkungen, insbesondere durch Geschosse und Stich- oder Hiebwaffen geschützt. Zudem wird die gegenseitige Leistungssteigerungen des Energiespeichers und der die Schutzvorrichtung tragenden Person optimal begünstigt.

Erfindungsgemäß kann vorgesehen sein, dass der geschosshemmende Verbund softballistisch ausgebildet ist. Der geschosshemmende Verbund kann dabei aus mehreren miteinander verbundenen Lagen eines Gewebes bzw. eines textilen bzw. flexiblen Werkstoffs gebildet sein. Vorzugsweise können 20 bis 40 Lagen, besonders bevorzugt 28 bis 36 Lagen, miteinander verbunden werden. Die Verbindung erfolgt dabei vorzugsweise derart, dass der geschosshemmende Verbund flexibel bleibt. Als textiler Werkstoff eignet sich besonders Aramid, vorzugsweise nur Aramid. Es können jedoch auch andere textile bzw. flexible Werkstoffe, wie zum Beispiel HPPE-Fasern oder Mischungen aus verschiedenen textilen bzw. flexiblen Werkstoffen eingesetzt werden. Möglich ist es auch, die verschiedenen Lagen aus unterschiedlichen Materialien auszubilden.

Die Lagen können grundsätzlich aus einem beliebigen Gewebe gebildet sein. In Frage kommt beispielsweise auch Polyethylen, Polyester, eine Gussmasse oder ein Faserverbund.

Die Energiespeicher können in Form einer oder mehrerer Energiespeicher-Lagen, vorzugsweise jeweils als Folienbatterien, in den geschosshemmenden Verbund aus dem textilen Werkstoff integriert sein.

Die Energiespeicher-Lagen können liegend und/oder hängend in dem softballistischen Verbund integriert sein. Die Integration kann dabei auf verschiedene Art und Weise, beispielsweise durch Implementieren oder Versteppen erfolgen.

Von Vorteil ist es, wenn in den Energiespeicher-Lagen Verbindungsbrücken zur Versteppung mit den Lagen aus dem Gewebe ausgebildet sind.

Durch die softballistische Ausbildung des geschosshemmenden Verbunds entsteht ein weiches, flexibles Paket, ohne einen sogenannten "strike face", d. h. eine starre Platte. Der softballistische Verbund kann geringen Schussbelastungen, zum Beispiel von Kleinkalibermunition, standhalten. Durch die weiche und flexible Gestaltung des softballistisch ausgebildeten geschosshemmenden Verbunds lässt sich dieser besonders günstig tragen. Der softballistische Verbund ist vorzugsweise mit einer Folie wasserdicht verschweißt, wodurch die Halteleistung des textilen Werkstoffs, insbesondere der Aramide, deutlich verbessert wird. Die Folie bietet darüber hinaus einen guten Schutz gegen einen Kurzschluss der Folienbatterien. Die Folie kann z. B. als textile Folie und/oder als Folienhülle ausgebildet sein.

Erfindungsgemäß kann ferner vorgesehen sein, dass der geschosshemmende Verbund hartballistisch ausgebildet ist. Dabei kann vorgesehen sein, dass der geschosshemmende Verbund eine starre, geschosshemmende Platte aufweist und der Energiespeicher in Form einer oder mehrerer Energiespeicher-Lagen mit der Platte verbunden ist. Die starre, geschosshemmende Platte kann vorzugsweise aus Keramik, Polymeren, Polyethylen (vorzugsweise HD-PE), Metall, vorzugsweise Stahl, oder einem anderen geeigneten, starren Material gebildet sein. Besonders geeignet sind Oxid- und Nichtoxidhochleistungskeramiken, insbesondere Aluminiumoxid, Siliciumcarbid oder Borcarbid.

Die Platten weisen vorzugsweise eine Kurvenform auf, um die Auftreffenergie besser zu absorbieren, aber auch, um sich der Körperform des Trägers anzupassen. Man unterscheidet hier zwischen "single curved" oder "multicurved". "Single curved" beschreibt eine Krümmung um eine, "multicurved" eine Krümmung um mehrere Achsen. Eine weitere Anpassung an den Körper erfolgt durch die ergonomische Formung des sogenannten "backings". Um die Bewegungsfreiheit zu erhöhen, können die oberen beiden Ecken entfernt werden. Dies senkt allerdings den effektiven Schutz, da die Platten so eine geringere Oberfläche des Torsos abdecken.

Vorzugsweise weist der hartballistisch ausgebildete Verbund ein sogenanntes "strike face" aus Keramiken/Polymeren auf. Die Keramiken/Polymere sind mit einer, vorzugsweise mehreren Lagen eines Gewebes bzw. eines textilen bzw. flexiblen Werkstoffs und/oder mit Metalllegierungen verbunden. Dies wird als "backing" bezeichnet und vorzugsweise mittels einem Hochleistungskleber mit dem "strike face" verbunden. Als Gewebe eignet sich Aramid in besonderer Weise. Die textilen Lagen sind zunächst weich bzw. liegen als Gewebe/Gelege vor und werden dann mit der Platte unlösbar und starr verbunden. Hierzu eignet sich der Einsatz einer Klebefolie oder eines Klebers, durch welchen die Lagen aus dem textilen Werkstoff (bzw. allgemeiner aus dem Gewebe) unter Einwirkung von Druck und Temperatur fest, unlösbar und starr mit der Platte verbunden werden. Derart gebildete geschosshemmende Verbunde können auch sogenannten Langkerngeschossen standhalten.

Bei einem Gewebe (z. B. Twaron oder Kevlar) eignet sich eine Leinwandbindung, eine Panamabindung, eine Atlasbindung oder eine Körperbindung besonders. Bei einem unidirektionalen Gelege eignet sich eine stark parallelisierte Fadenschar bzw. parallel angeordnete Faserroverings, d. h. Bündel von endlosen, unverdrehten, gestreckten Fasern (Filamente). Die einzelnen Lagen können sich dabei in der Faserausrichtung unterscheiden. Es können auch biaxiale oder multiaxiale Gelege (z. B. "Dyneema" oder "Spectra") eingesetzt werden. Möglich ist auch ein Gewebe- oder Gelegemix.

Das "backing" kann, wie erwähnt, aus Metalllegierungen und/oder weichballistischen Schutzpaketen bestehen. Als Grundstoff für die Metalllegierungen kann vorzugsweise Aluminium verwendet werden. Die weiteren Bestandteile der Legierung können je nach Bedarf (Steigerung der Zugfestigkeit/Bruchdehnung/Härte) Silizium, Kupfer und Magnesium sein.

Die weichballistischen Schutzpakete können aus Hochleistungstextilien bestehen, vorzugsweise para Aramide (= para aromatische Polyamide) oder HPPE (= High-Performance Polyethylen) oder PE-UHMW (= ultrahochmolekulares Polyethylen). Alternativ können auch Glasfasern eingesetzt werden.
Die einzelnen Lagen (Gewebe, Gelege der Hochleistungstextilfasern) können miteinander durch Spezialharze verklebt werden. Beispielhaft ist hier PVB Polyvinyl Batyral zu nennen.

Von Vorteil ist es, wenn die Energiespeicher-Lagen mit der Platte unlösbar und starr verbunden, vorzugsweise verklebt, sind. Dies kann auf beliebige Art und Weise erfolgen. Es ist dabei darauf zu achten, dass die Halteleistung des Gesamtverbunds durch die eingebrachten Energiespeicher-Lagen, vorzugsweise Folienbatterien, nicht negativ beeinflusst wird. Besonders vorteilhaft kann es daher sein, wenn zwischen jeder Energiespeicher-Lage wenigstens eine Lage aus dem flexiblen, textilen Werkstoff, vorzugsweise eine Aramidlage, gelegt wird. Die Verbindung der textilen, flexiblen Lagen mit der Platte kann dabei in der bereits beschriebenen Art und Weise erfolgen. Durch diese Anordnung der Energiespeicher-Lagen wird der gesamte Energiespeicher ergonomisch geformt, geschützt und hat meist noch den positiven Effekt, dass bei einer Entladung der Batterie in der kalten Jahreszeit die Abwärme den Träger wärmt. Ein weiterer Vorteil besteht darin, dass bei einer körpernahen Tragweise der Energiespeicher-Lagen der Körper die Batterie wärmt, so dass deren Kapazität, die insbesondere bei Kälte üblicherweise geringer ist, verbessert wird.

Die Energiespeicher-Lagen werden vorzugsweise nicht direkt, sondern über die Gewebelage (vorzugsweise Aramid) mit der geschosshemmenden Platte (vorzugsweise Keramik) verklebt. Die Energiespeicher-Lagen können auch in Harz bzw. Kunstharz oder dergleichen eingelegt werden.

Erfindungsgemäß kann vorgesehen sein, dass der geschosshemmende Verbund, unabhängig davon, ob dieser soft- oder hartballistisch ausgebildet ist, als Einschubelement ausgebildet ist. Dies ermöglicht eine einfache, standardisierte Herstellung des geschosshemmenden Verbunds und einen flexiblen Einsatz in verschiedenen Schutzvorrichtungen.

Der geschosshemmende Verbund mit den Energiespeicher-Lagen kann von einer vorzugsweise gummierten Außenhülle umgeben sein. Diese kann gegebenenfalls fest mit dem geschosshemmenden Verbund verbunden sein. Der geschosshemmende Verbund kann beispielsweise mit Elastomeren oder Textilien ummantelt sein.

Von Vorteil ist es, wenn die Energiespeicher-Lagen im Wesentlichen deckungsgleich mit den geschosshemmenden Lagen im Verbund angeordnet sind. Dadurch ergibt sich eine besonders ergonomische, geschützte und platzsparende Anordnung der Energiespeicher-Lagen im Verbund mit den Lagen aus dem textilen Werkstoff bzw. der starren Platte.

Die Energiespeicher-Lagen können auch kleiner als die geschosshemmenden Lagen ausgebildet sein. Vorzugsweise werden dann mehrere Energiespeicher-Lagen in einer Ebene stirnseitig neben-/übereinander verlegt, so dass die Energiespeicher-Lagen gemeinsam eine mit den geschosshemmenden Lagen möglichst deckungsgleiche Fläche einnehmen.

Von Vorteil ist es, wenn der Energiespeicher als 12 Volt-Batterie ausgelegt ist bzw. eine 12 Volt-Spannung zur Verfügung steht. Eine derartige Spannung eignet sich in besonderer Weise für die elektrischen Geräte, die eine die Schutzvorrichtung tragende Person üblicherweise zu betreiben hat.

Von Vorteil ist es ferner, wenn eine Energieschnittstelle vorgesehen ist. Vorzugsweise ist die Energieschnittstelle an einem vorderen Bereich der Schutzvorrichtung, beispielsweise an einer Vorderseite einer Schutzweste, so angeordnet, dass diese für die die Schutzvorrichtung tragende Person gut zugänglich ist. Die Energieschnittstelle kann sowohl zum Laden des
Energiespeichers als auch zur Entnahme von Strom vorgesehen sein. Die Energieschnittstelle ist vorzugsweise derart gestaltet, dass die üblichen Verbraucher eingesteckt werden können.

Vorteilhafte Weiterbildungen und Ausgestaltungen der Erfindung ergeben sich aus den weiteren abhängigen Ansprüchen.

Nachfolgend sind Ausführungsbeispiele der Erfindung prinzipmäßig anhand der Zeichnung dargestellt.

Es zeigt:
- Fig. 1: eine Vorderansicht auf eine am Körper zu tragende Schutzvorrichtung in einer Ausgestaltung als ballis- tische Schutzweste;
- Fig. 2: einen vergrößerten Schnitt durch einen erfindungsge- mäßen geschosshemmenden Verbund in einer softbal- listischer Ausgestaltung, bei welchem einzelne Lagen zur besseren Erkennbarkeit nach oben gebogen sind;
- Fig. 3: eine Ansicht auf die Außenseite eines geschosshem- menden Verbunds in einer hartballistischen Ausbil- dung als Einschubelement;
- Fig. 4: eine Ansicht auf die körperzugewandte Innenseite ei- nes hartballistischen Verbundes gemäß Fig. 3;
- Fig. 5: einen vergrößerten Teilschnitt durch einen hartbal- listischen Verbund gemäß Einzelheit V der Fig. 4, bei welchem einzelne Lagen zur besseren Erkennbar- keit nach außen gebogen sind; und
- Fig. 6: eine vergrößerte Explosionsdarstellung eines zu Fig. 5 alternativen hartballistischen Verbunds.

Am Körper zu tragende Schutzvorrichtungen 1, insbesondere ballistische Schutzwesten, sind aus dem allgemeinen Stand der Technik hinlänglich bekannt, weshalb auf deren spezifische Ausgestaltung und Varianten nachfolgend nicht näher eingegangen wird. Näher eingegangen wird nachfolgend nur auf die für die Erfindung wesentlichen Merkmale.

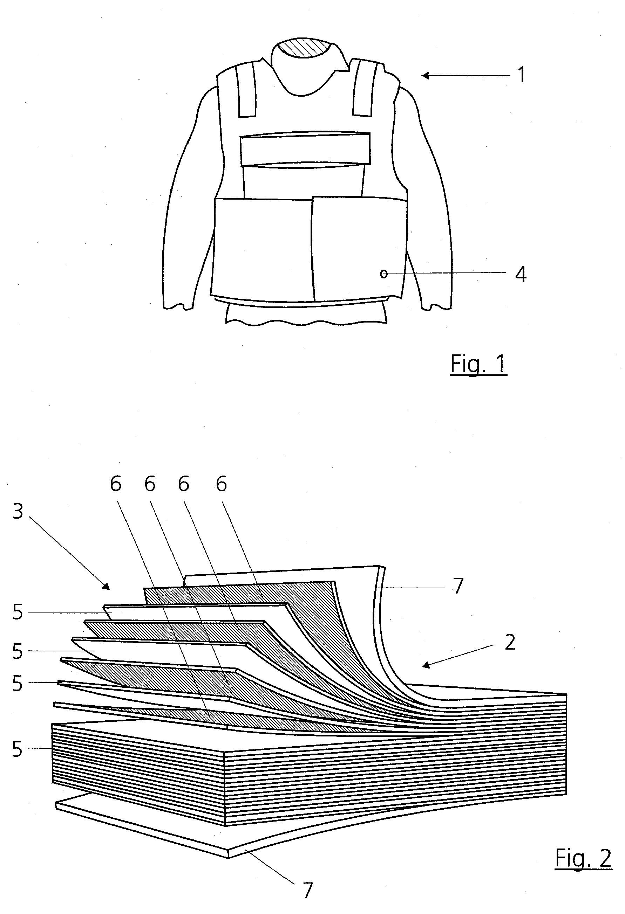

Fig. 1 zeigt eine Schutzvorrichtung in einer Ausgestaltung als ballistische Schutzweste 1, welche von einem Menschen getragen wird. Die Schutzweste 1 weist einen in den Figuren 2 bis 5 näher dargestellten geschosshemmenden Verbund 2 auf, der aus mehreren einzelnen Lagen zusammengesetzt ist. Der geschosshemmende Verbund 2 kann an entsprechend geeigneten Stellen der Schutzweste 1 angeordnet sein. Der geschosshemmende Verbund 2 kann ein- aber auch mehrteilig ausgebildet sein bzw. es können mehrere geschosshemmende Verbunde vorgesehen sein, um den Träger der Schutzvorrichtung geeignet zu schützen.

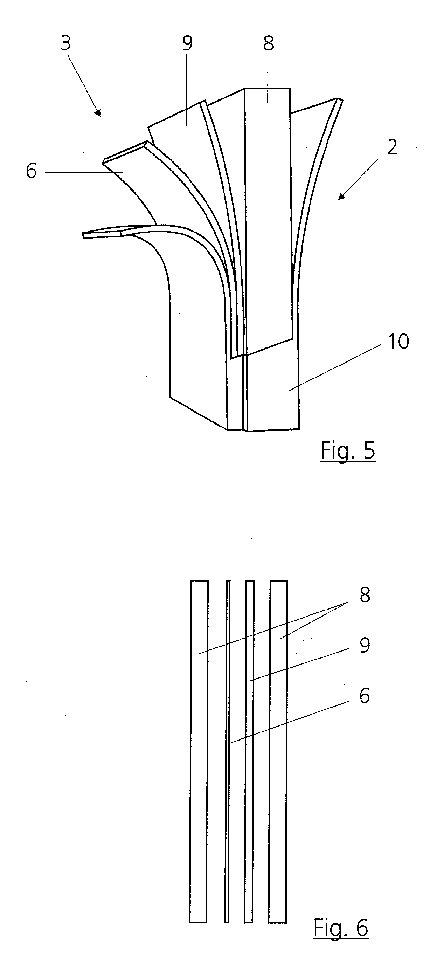

In den geschosshemmenden Verbund 2 ist, wie sich insbesondere aus den Figuren 2 und 5 ergibt, ein Energiespeicher 3 zur elektrischen Energieversorgung integriert. Der Energiespeicher 3 kann dabei geeignet sein, die elektrischen Geräte mit Energie zu versorgen, die üblicherweise von einem Träger der Schutzweste 1 mitgeführt werden. Eine Ausgestaltung des Energiespeichers 3 als 12 Volt-Batterie ist dabei besonders geeignet.

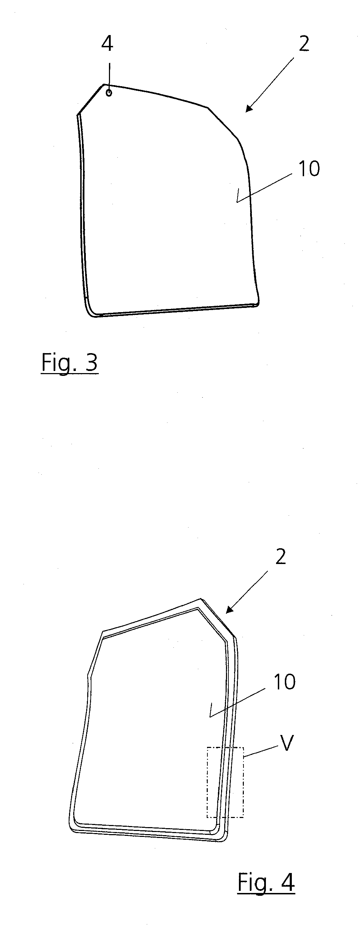

Wie sich aus Fig. 1 und Fig. 3 ergibt, weist die Schutzweste 1 eine Energieschnittstelle 4 auf, durch die der Energiespeicher 3 geladen und entladen werden kann.

In dem Ausführungsbeispiel ist vorgesehen, dass der Energiespeicher 3 derart in den Verbund 2 integriert ist, dass der Energiespeicher 3, wenn die Schutzweste 1 korrekt getragen wird, an der körperzugewandten Seite des geschosshemmenden Verbunds 2 angeordnet ist.

In den Ausführungsbeispielen ist der Energiespeicher 3 lagenweise in dem geschosshemmenden Verbund 2 integriert und als Batterie ausgebildet.

Fig. 2 zeigt eine softballistische Ausgestaltung des geschosshemmenden Verbunds 2. Softballistische geschosshemmende Verbunde bzw. sogenannte softballistische Schutzpakete sind aus dem allgemeinen Stand der Technik hinlänglich bekannt, weshalb nachfolgend nur auf die erfindungswesentlichen Merkmale näher eingegangen wird.

Der in Fig. 2 dargestellte geschosshemmende Verbund 2 ist aus mehreren miteinander verbundenen Lagen 5 eines Gewebes, vorliegend aus mehreren Lagen eines textilen Werkstoffs gebildet. Im Ausführungsbeispiel sind 20 bis 40, vorzugsweise 28 Lagen 5 des textilen Werkstoffs vorgesehen. Bei dem textilen Werkstoff kann es sich um einen beliebigen textilen Werkstoff handeln, der geeignet ist, im Verbund die gewünschte geschosshemmende Wirkung zu erzielen und gleichzeitig flexibel bleibt. In besonderer Weise eignet sich hierfür Aramid, z. B. aromatische Polyamidfasern.

In der in Fig. 2 dargestellten Ausführungsform ist vorgesehen, dass der Energiespeicher 3 aus mehreren Energiespeicher-Lagen 6 gebildet und in dem geschosshemmenden Verbund 2 integriert ist. Dabei sind die Energiespeicher-Lagen 6 jeweils zwischen Aramidlagen 5 angeordnet. Vorgesehen sein kann dabei, dass zwischen zwei Energiespeicher-Lagen 6 wenigstens eine Aramidlage 5 angeordnet ist. Im Ausführungsbeispiel ist vorgesehen, dass es sich hierbei genau um eine Lage 5 handelt. Im Ausführungsbeispiel sind vier Energiespeicher-Lagen 6 vorgesehen, die in dem geschosshemmenden Verbund 2 jeweils getrennt durch Aramidlagen 5 an der dem Körper zugewandten Seite angeordnet sind.

Im Ausführungsbeispiel ist vorgesehen, dass bei einem üblicherweise 32 Aramidlagen 5 aufweisenden geschosshemmenden Verbund 2 vier Aramidlagen 5 entfernt sind und durch die Energiespeicher-Lagen 6 ersetzt werden. Dadurch wird die Form und Stärke des geschosshemmenden Verbunds 2 nicht verändert und kann daher problemlos in die Schutzweste 1 integriert werden, beispielsweise auch als Einschubelement.

In der softballistischen Ausgestaltung des geschosshemmenden Verbundes 2 befindet sich der Energiespeicher 3 hinter dem softballistischen Schutzpaket, d. h. an der von der Außenseite abgewandten Seite des geschosshemmenden Verbundes 2.

Die Verbindung der Energiespeicher-Lagen 6 mit den Aramidlagen 5 kann in vielfältiger Art und Weise erfolgen, in dem Ausführungsbeispiel ist vorgesehen, dass die Energiespeicher-Lagen 6 mit den Aramidlagen 5 versteppt sind. Hierzu können die Energiespeicher-Lagen 6 nicht näher dargestellte Verbindungsbrücken zur Versteppung mit den Aramidlagen 5 aufweisen.

Vorgesehen sein kann zum Beispiel eine Verbindung der Energiespeicher-Lagen 6 mit den Aramidlagen 5 an exponierten Punkten am äußeren Rand. Vorgesehen sein kann auch eine komplette Randversteppung. In beiden Fällen ist es vorteilhaft, wenn die Ränder entsprechend dimensioniert werden, um nach der Fixierung noch die geforderte Versiegelung zu gewährleisten. Eine Verbindung bzw. Versteppung der Energiespeicher-Lagen mit den Aramidlagen ist auch im Mittelpunkt bzw. in einem Bereich in der Mitte der Lagen möglich. Hierfür kann ein entsprechender Bereich der Energiespeicher-Lagen 6 so ausgebildet sein, dass die Möglichkeit einer Versteppung gegeben ist, beispielsweise über Verbindungsbrücken. Möglich ist es auch, eine Versteppung quer über die Flächen der Lagen 5, 6 durchzuführen, wobei es auch in diesem Fall vorteilhaft ist, entsprechende Flächen bzw. Stege bzw. Brücken in den Energiespeicher-Lagen 6 zur Verfügung zu stellen, um die Versiegelung zu gewährleisten. Grundsätzlich ist jede Art der Versteppung bzw. Verbindung möglich, insofern entsprechende Bereiche in den Energiespeicher-Lagen 6 als Verbindungsbrücken bzw. Verbindungsstege ausgelegt sind.

In dem in Fig. 2 dargestellten Ausführungsbeispiel ist vorgesehen, dass die Lagen 5 nur aus Aramiden bestehen. Es ist jedoch genauso möglich, allgemein ein geeignetes Gewebe, insbesondere andere flexible Werkstoffe bzw. andere textile Werkstoffe einzusetzen. Die Verbindung der Lagen 5 kann über unterschiedlichste Nähtechniken erfolgen.

Der in Fig. 2 dargestellte geschosshemmende Verbund 2 ist durch eine vorzugsweise hüllenförmige Folie 7 wasserdicht verschweißt.

In nicht näher dargestellter Weise kann vorgesehen sein, dass der softballistische, geschosshemmende Verbund 2 mit einem zusätzlichen Stichschutz und/oder Splitterschutz versehen ist.

Die Energiespeicher-Lagen 6 sind in allen dargestellten Ausführungsbeispielen als sehr dünne Folienbatterien ausgebildet.

Die Figuren 3 und 4 zeigen einen geschosshemmenden Verbund in einer Ausgestaltung als Einschubelement in eine Schutzvorrichtung, im Ausführungsbeispiel in eine ballistische Schutzweste 1.

Der in den Figuren 3 und 4 dargestellte geschosshemmende Verbund 2 ist dabei, wie sich aus der Schnittdarstellung gemäß Fig. 5 ergibt, hartballistisch ausgebildet.

Der geschosshemmende Verbund 2 weist, wie bereits beschrieben, eine Energieschnittstelle 4 auf, welche im Ausführungsbeispiel zur Einspeisung bzw. zur Entnahme von Strom ausgebildet ist (siehe Fig. 3). Die Energieschnittstelle 3 ist für eine 12-Volt-Spannung ausgebildet.

Wie sich aus einer Zusammenschau der Fig. 4 mit der Fig. 5 ergibt, ist der Energiespeicher 3 an der körperzugewandten Seite des geschosshemmenden Verbundes 2 angeordnet. D. h. der Energiespeicher 3 befindet sich in der hartballistischen Ausgestaltung hinter dem sogenannten "strike face". Der geschosshemmende Verbund 2 weist eine starre, geschosshemmende Platte 8 auf, welche mit dem Energiespeicher 3 verbunden ist. Die Platte 8 kann aus unterschiedlichsten Keramiken (vorzugsweise Hochleistungskeramiken), Polymeren, Polyethylenen, Metallen oder einer Kombination der vorgenannten Materialien bestehen. Im Ausführungsbeispiel ist die starre Platte 8 als Keramikplatte (vorzugsweise aus Borcarbid) ausgebildet. Die starre Platte 8 ist mit mehreren Lagen eines Gewebes 9 verbunden. Bei dem Gewebe handelt es sich vorzugsweise um Aramid 9 oder ein ähnliches Material. Im Ausführungsbeispiel ist die Keramikplatte 8 mit mehreren Lagen Aramid 9 verbunden, das zunächst weich bzw. flexibel als Gewebe/Gelege vorliegt und dann mittels einer nicht näher dargestellten Klebefolie oder Klebern mit der Keramikplatte 8 unter Einwirkung von Druck und Temperatur fest, unlösbar und starr verbunden ist. Die Keramikplatte 8 ist ausgebildet, um auch sogenannten Langkerngeschossen standzuhalten.

Im Ausführungsbeispiel sind 30 bis 40, vorzugsweise 36 Aramidlagen 9 vorgesehen.

Vorgesehen ist, dass der Energiespeicher wenigstens eine Energiespeicher-Lage 6 aufweist. Im Ausführungsbeispiel dargestellt ist lediglich eine Energiespeicher-Lage 6. Damit der geschosshemmende Verbund 2 hinsichtlich seiner Dimensionen, insbesondere auch hinsichtlich seiner Stärke, weiterhin die üblichen Abmessungen aufweist, ist vorgesehen, dass bei einem herkömmlichen geschosshemmenden Verbund Aramidlagen gegen Energiespeicher-Lagen 6 ausgetauscht werden. Vorzugsweise werden so viele Aramidlagen aus dem Verbund 2 entfernt, wie Energiespeicher-Lagen 6 eingefügt werden. Die Energiespeicher-Lagen 6 sind dabei als Folienbatterien ausgebildet. Vorgesehen ist, dass bei einem Einsatz von mehreren Energiespeicher-Lagen 6 jeweils mindestens eine Aramidlage 9 zwischen den Energiespeicher-Lagen 6 liegt. Die Verbindung der Aramidlagen 9 mit der Keramikplatte 8 kann dabei in der bereits beschriebenen Art und Weise erfolgen. Die Energiespeicher-Lagen 6 werden dabei vorzugsweise über die Aramidlagen 9 mit der Keramikplatte 8 verklebt.

Eine Ausbildung der textilen Lagen aus Aramid eignet sich in besonderer Weise, dies ist jedoch nicht zwingend notwendig, vorgesehen sein können auch andere Gewebe, insbesondere textile bzw. flexible Werkstoffe, die für den vorgesehenen Zweck geeignet sind.

Im Ausführungsbeispiel ist vorgesehen, dass die Energiespeicher-Lagen mit der Keramikplatte 8 unlösbar und starr verklebt sind. Möglich ist es jedoch auch, die Energiespeicher-Lagen 6 so mit den textilen Lagen, vorzugsweise den Aramidlagen 9, zu verbinden, wie dies hinsichtlich der in Fig. 2 dargestellten Ausführungsform bereits beschrieben wurde, d. h. vorzugsweise durch eine Versteppung.

Die Lagen 9 aus dem textilen Werkstoff können dann anschließend in bekannter Art und Weise mit der Keramikplatte 8 verbunden werden, vorzugsweise durch ein ganzflächiges Verkleben. Gegebenenfalls kann zwischen der Keramikplatte bzw. allgemeiner dem "strike face" und den Lagen 9 aus dem textilen Werkstoff bzw. allgemeiner dem "backing" eine perforierte Metallschicht, vorzugsweise Aluminium implementiert werden. Durch das Herausreißen eines Aluminiumstücks beim Eindringen eines Geschosses vergrößert sich dessen Querschnitt, wodurch die Energiedichte gesenkt wird. Die Restenergie des Geschosses kann dadurch besser aufgenommen werden.

Der geschosshemmende Verbund 2 ist von einer Außenhülle 10 umschlossen. Bei der Außenhülle 10 kann es sich um eine Folie handeln, die die Eigenschaften aufweist, die bereits bezüglich dem Ausführungsbeispiel gemäß Fig. 2 beschrieben wurden. Vorzugsweise ist die Außenhülle aus einem gummierten Material gebildet, welches den Verbund umgibt. Vorgesehen sein kann dabei auch eine sogenannte "Schachtellösung", bei der eine vorzugsweise starre bzw. feste Box vorgesehen ist, in welche der Verbund eingelegt und die anschließend durch einen Deckel verschlossen wird. Der Verbund kann in der "Schachtel" beliebig fixiert, vorzugsweise vergossen oder verklebt werden.

In Fig. 6 ist in einer Explosionsdarstellung eine zu Fig. 5 alternative Ausgestaltung eines geschosshemmenden Verbunds (ohne Außenhülle) dargestellt. Gleiche Bezugszeichen bezeichnen dabei gleiche Teile, weshalb diese und deren Ausgestaltung und Varianten nicht näher beschrieben werden. Der geschosshemmende Verbund gemäß Fig. 6 weist sowohl an der Vorderseite als auch an der Rückseite eine Keramikplatte 8 auf. Diese können dünner als in Fig. 5 ausgebildet sein, um gemeinsam eine gewünschte geschosshemmende Wirkung zu erzielen. Zwischen den Keramikplatten 8 ist ein Aramidpaket 9 angeordnet, welches aus mehreren Lagen Aramid gebildet ist. Des weiteren ist/sind zwischen den Keramikplatten 8 ein oder mehrere Energiespeicher-Lagen 6 angeordnet. Vorgesehen sein können auch zwei oder mehrere Aramidpakete 9. Vorzugsweise können dann die Energiespeicher-Lagen zwischen den Aramidpaketen 9 oder innerhalb derselben angeordnet sein.

Sowohl in der softballistischen als auch in der hartballistischen Ausgestaltung des geschosshemmenden Verbundes 2 ist vorgesehen, dass die Energiespeicher-Lagen 6 im Wesentlichen, vorzugsweise exakt, deckungsgleich mit den geschosshemmenden textilen Lagen 5 bzw. der Keramikplatte 8 angeordnet sind. Weiterhin ist vorgesehen, dass die Lagen 5, 6 bzw. die Keramikplatte 8 planparallel zueinander angeordnet sind.

Generell könne die bezüglich der hart-/softballistischen Ausgestaltung beschriebenen Varianten auch auf die jeweils andere ballistische Ausgestaltung angewandt werden. Bei den als Folienbatterien ausgebildeten Energiespeicher-Lagen 6 handelt es sich vorzugsweise um Lithium-Ionen oder Lithium-Polymer-Batterien.

Durch die Anordnung der Energiespeicher-Lagen 6 wird erreicht, dass der Energiespeicher nicht mehr direkt durch Geschosse oder Stich- oder Hiebwaffen getroffen werden kann. Durch auftretende Geschosse wird der Energiespeicher 3 somit maximal leicht verbeult. Dies minimiert die Gefahr von Kurzschlüssen, Explosionen sowie austretenden giftigen Dämpfen oder Säuren auf ein Minimum. Des weiteren wird eine erhebliche Trauma- und Penciling-Reduktion erreicht. Über die große Fläche kann sich die durch den Einschlag eines Geschosses entstehende Energie gleichmäßig verteilen. Dabei wirkt die Viskosität des in dem Energiespeicher enthaltenen Elektrolyts energieabsorbend. Zusätzlich kann die entstehende Energie durch eine Gitternetzstruktur der Energiespeicherkomponenten gleichmäßig abgeleitet und verteilt werden. Durch die Kombination der verschiedenen Effekte ergeben sich die trauma- und pencilingreduzierenden Wirkungen. Somit ist eine Reduktion der sogenannten "backings" und/oder anderer traumareduzierenden Abdecklagen oder Schockabsorbern möglich (die jedoch trotzdem zusätzlich partiell - z. B. im Herz oder Wirbelsäulenbereich - oder vollflächig vorgesehen sein können). Eine Gitternetzstruktur der Energiespeicher-Lagen kann zudem abstumpfend auf Schnitt- und Stichwaffen wirken, so dass auch eine Reduzierung des sogenannten Stichschutzes bzw. des Stichschutzmaterials erfolgen kann, dies ist insbesondere für die softballistische Ausgestaltung des geschosshemmenden Verbundes 2 interessant.

Die mögliche Gefahr eines sogenannten "thermal runaways" (Hitzeexplosion), welche bei einer Beschädigung des Energiespeichers auftreten kann, kann durch eine chemische Kompensationsschicht reduziert bzw. verhindert werden.

In dem geschosshemmenden Verbund können para-aromatische Aramide vorgesehen sein, die als zusätzlicher Flammschutz dienen. Falls es zu einem erweiterten "thermal runaway" kommt, verzögern bzw. verhindern die para-aromatischen Aramide die Entstehung eines Feuers, da diese nur verkohlen und nicht verbrennen. Somit ist auch die Gefahr eines Fremdentzündens des Akkumulators von außen auf ein Minimum reduziert.

## Patentansprüche

1. Am Körper zu tragende Schutzvorrichtung, insbesondere ballistische Schutzweste, mit einem aus mehreren Lagen zusammengesetzten, geschosshemmenden Verbund,
**dadurch gekennzeichnet, dass**
in den geschosshemmenden Verbund (2) ein Energiespeicher (3) zur elektrischen Energieversorgung integriert ist.

2. Schutzvorrichtung nach Anspruch 1,
**dadurch gekennzeichnet, dass**
der Energiespeicher (3) lagenweise in den geschosshemmenden Verbund (2) integriert ist.

3. Schutzvorrichtung nach Anspruch 1 oder 2,
**dadurch gekennzeichnet, dass**
der Energiespeicher (3) derart in den Verbund (2) integriert ist, dass der Energiespeicher (3), wenn die Schutzvorrichtung (1) korrekt getragen wird, an der körperzugewandten Seite des Verbunds (2) angeordnet ist.

4. Schutzvorrichtung nach einem der Ansprüche 1 bis 3,
**dadurch gekennzeichnet, dass**
der geschosshemmende Verbund (2) softballistisch ausgebildet ist und der geschosshemmende Verbund (2) aus mehreren miteinander verbundenen Lagen (5) eines Gewebes gebildet ist und der Energiespeicher (3) in Form einer oder mehrerer Energiespeicher-Lagen (6) integriert ist.

5. Schutzvorrichtung nach Anspruch 4,
**dadurch gekennzeichnet, dass**
zwischen zwei Energiespeicher-Lagen (6) wenigstens eine Lage (5) des Gewebes angeordnet ist.

6. Schutzvorrichtung nach einem der Ansprüche 4 oder 5,
**dadurch gekennzeichnet, dass**
die Energiespeicher-Lagen (6) mit den Lagen (5) aus dem Gewebe versteppt sind.

7. Schutzvorrichtung nach Anspruch 6, **dadurch gekennzeichnet, dass**
in den Energiespeicher-Lagen (6) Verbindungsbrücken zur Versteppung mit den Lagen (5) aus dem Gewebe ausgebildet sind.

8. Schutzvorrichtung nach einem der Ansprüche 4 bis 7,
**dadurch gekennzeichnet, dass**
der Verbund (2) mit einer Folie (7) wasserdicht verschweißt ist.

9. Schutzvorrichtung nach einem der Ansprüche 1 bis 8,
**dadurch gekennzeichnet, dass**
der geschosshemmende Verbund (2) hartballistisch ausgebildet ist.

10. Schutzvorrichtung nach Anspruch 9,
**dadurch gekennzeichnet, dass**
der geschosshemmende Verbund (2) eine starre, geschosshemmende Platte (8) aufweist und der Energiespeicher (3) in Form einer oder mehrerer Energiespeicher-Lagen (6) mit der Platte (8) verbunden ist.

11. Schutzvorrichtung nach Anspruch 10,
**dadurch gekennzeichnet, dass**
die Energiespeicher-Lagen (6) mit der Platte (8) unlösbar und starr verklebt sind.

12. Schutzvorrichtung nach Anspruch 9 oder 10,
**dadurch gekennzeichnet, dass**
die Platte (8) aus Keramik, Polymeren, Polyethylen oder Metall, vorzugsweise Stahl, oder einer Kombination dieser Materialien gebildet ist.

13. Schutzvorrichtung nach einem der Ansprüche 1 bis 12,
**dadurch gekennzeichnet, dass**
die Energiespeicher-Lagen (6) im Wesentlichen deckungsgleich mit den geschosshemmenden Lagen (5) im Verbund angeordnet sind.

14. Schutzvorrichtung nach einem der Ansprüche 1 bis 13,
**dadurch gekennzeichnet, dass**
die Energiespeicher-Lagen (6) als Folienbatterie ausgebildet sind.

15. Schutzvorrichtung nach einem der Ansprüche 1 bis 14,
**dadurch gekennzeichnet, dass**
der textile Werkstoff ein Gewebe, vorzugsweise Aramid, ist.
